# EUROPÄISCHE PATENTANMELDUNG

(11) **EP 2 073 452 A1**
(43) Veröffentlichungstag der Anmeldung: **24.06.2009**
(21) Anmeldenummer: 08105800.0
(22) Anmeldetag: 14.11.2008
(51) Int. Cl.: H04L 12/46, B60R 16/023, G06F 13/40

(54) **Buskommunikationssystem**

(30) Priorität: 19.12.2007 DE 102007061097
(71) Anmelder: ROBERT BOSCH GMBH, 70442 Stuttgart (DE)
(72) Erfinder: Ueberdiek, Carsten, 3526 Miskolc (HU)

(57) **Zusammenfassung**

Ein Buskommunikationssystem (11) zur Vernetzung von elektronischen Einheiten ist so auszuführen, dass es kostengünstig hergestellt werden kann und eine hohe EMV-Festigkeit aufweist.

Dazu weist das Buskommunikationssystem (11), das einen FlexRay-Bus (12) enthält, der durch Verkettungleitungen (16) (Daisy Chain) erweitert ist, eine Weiche (26) auf, in der, jeweils als Abzweigung, je eine der Kommunikationsleitungen Bus Plus (13) und Bus Minus (14) mit je einer der Verkettungsleitungen (16) zusammengeführt ist. Die Weiche (26) ist einem Steckverbinder (22) eines Steuergeräts (19) angebracht und somit einer Leiterplatte (24) des Steuergeräts (19) vorgelagert. Die aus der Weiche (26) austretenden zwei Leitungen (13,14) können nun, ohne eine bauliche Veränderung der Leiterplatte (24), einer auf der Leiterplatte (28) angeordneten, zweipoligen Hardware-Schnittstelle (27) zugeführt werden.

Dieses Buskommunikationssystem (11) kommt vorzugsweise im Automobilbau zum Einsatz.

## Beschreibung

### Stand der Technik

Die Erfindung geht aus von einem Buskommunikationssystem zur Steuerung von elektonischen Einheiten. Durch die DE 197 40 306 A1 ist bereits ein Buskommunikationssystem bekannt, über das Baugruppengeräte, Aktoren, Sensoren und andere Einrichtungen einer Maschine gesteuert werden. Das Buskommunikationssystem weist einen CAN-Bus auf, dessen Übermittlungsgeschwindigkeit von digitaler Information beschränkt ist und heutigen Anforderungen manchmal nicht mehr genügt.

Aus einem weiteren Stand der Technik ist ein Buskommunikationssystem für den Einsatz in Automobilen bekannt, dessen Bus unter dem Eigennamen FlexRay gegenüber einem CAN-Bus eine höhere Datenübertragungsrate, eine Echtzeit-Fähigkeit und eine höhere Ausfallsicherheit hat und deshalb insbesondere bei sicherheitsrelevanten Anwendungen, wie Air Bag oder bei schnell ablaufenden Regelvorgängen, wie die Regelung der Bremsanlage oder der Stoßdämpfung, bevorzugt zum Einsatz kommt.

Der FlexRay verbindet, vereinfacht ausgedrückt, Steuergeräte mit einer Kontrolleinheit. Dazu weist der FlexRay zwei Kommunikationsleitungen, nämlich Bus Plus und Bus Minus auf. Hinzu kommen zwei weitere Leitungen einer sogenannten Daisy Chain, die entweder als Sense-Leitungen zur Istwerterfassung fungieren können oder den FlexRay mit einem nachfolgenden Steuergerät verbindet und als Verkettungsleitungen bezeichnet werden.

Um eine Leiterplatte mit FlexRay und Daisy Chain zu verbinden, ist, um eine lösbare Verbindung zu haben, eine Steckverbindung vorgesehen. Die vier Leitungen von FlexRay und DaisyChain zusammen sind in einem Gegensteckverbinder an vier Gegenkontaktelementen angeschlossen, die beim Schließen der Steckverbindung mit zugeordneten vier Kontaktelementen eines an einer Außenfläche des Steuergerätes ortsfest angebrachten Steckverbinders in elektrischen Kontakt kommen.

Von den Kontaktelementen führen beim Stand der Technik innerhalb des Steuergerätes vier Anschlußleitungen zu einer Hardware-Schnittstelle auf einer Leiterplatte des Steuergeräts. Da diese Hardware-Schnittstelle standardmäßig nur zweipolig mit den Anschlüssen Bus Plus und Bus Minus ausgeführt ist, werden die Verkettungsleitungen der Daisy Chain auf der Leiterplatte mit den Anschlüssen Bus Plus und Bus Minus gebrückt. In nachteiliger Weise erfordert dies Bauraum auf der Leiterplatte, es stellt eine fertigungstechnisch ungünstige Veränderung der Leiterplatte dar und es verringert durch die Zuführung von zwei zusätzlichen Leitungen zur Leiterplatte und der daraus resultierenden Einstrahlmöglichkeit die Störfestigkeit des Buskommunikationssystems.

### Offenbarung der Erfindung

Das erfindungsgemäße Buskommunikationssystem mit den Merkmalen des unabhängigen Anspruchs hat demgegeüber den Vorteil, dass die zuvor erwähnten Unzulänglichkeiten in zufriedenstellendem Maße vermieden werden. Dazu werden die Verkettungsleitungen des Daisy Chain mit den Kommunikationsleitungen des FlexRay schon in dem, der Hardware-Schnittstelle auf der Leiterplatte des Steuergerätes vorgelagerten Steckverbinder zusammengeführt und von dem Steckverbinder nur noch zwei Anschlußleitungen zu der Hardware Schnittstelle auf der Leiterplatte weitergeführt. Da die Hardware Schnittstelle standardmäßig nur zweipolig ausgeführt ist, brauchen somit keine Veränderungen auf der Leiterplatte vorgenommen werden und es lassen sich standardisierte Leiterplatten verwenden, die in großer Stückzahl kostengünstig hergestellt werden können.

Eine Weiterentwicklung der Erfindung und eine vorteilhafte Ausführung wird durch die in den Unteransprüchen angegebenen Merkmale ermöglicht. Durch die Zusammenführung von Abzweigungen der Kommunikationsleitung Bus Plus mit einer ersten Verkettungsleitung und der Kommunikationsleitung Bus Minus mit einer zweiten Verkettungsleitung werden nur noch zwei anstelle von vier Anschlußleitungen von dem Steckverbinder zu der Hardware Schnittstelle auf der Leiterplatte benötigt. Dadurch ist die Einstrahlmöglichkeit von Störstrahlung reduziert und die EMV-Festigkeit des Buskommunikationssystem verbessert.

### Zeichnung

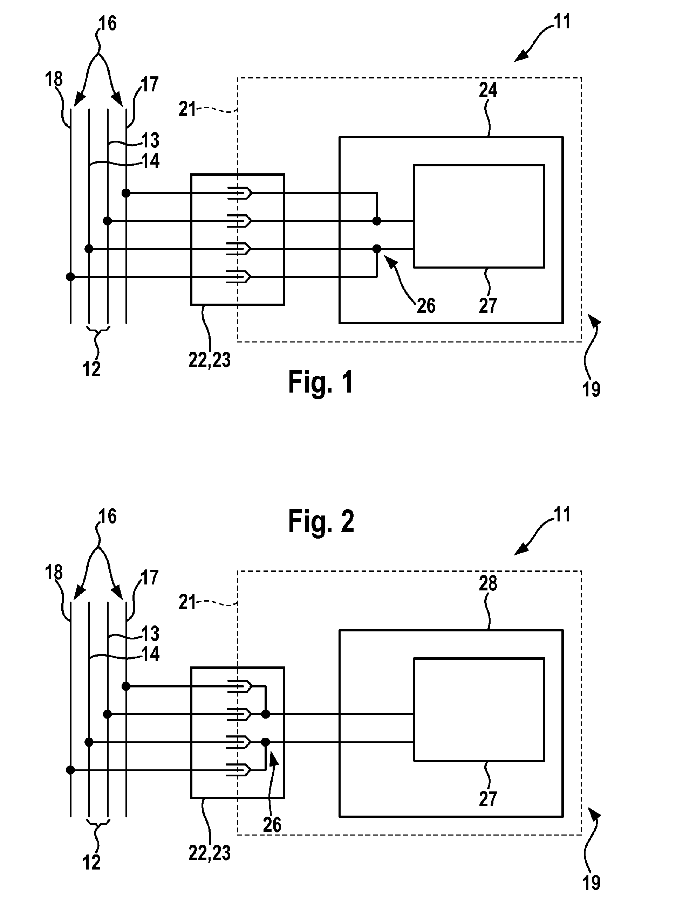

In der Zeichnung ist in schematischer Darstellung in der Figur 1 ein Ausführungsbeispiel entsprechend dem Stand der Technik und in der Figur 2 das erfindungsgemäße Ausführungsbeispiel angegeben.

### Beschreibung der Ausführungsbeispiele

In der Figur 1 ist, als ein Ausführungsbeispiel nach dem Stand der Technik, ein Buskommunikationssystem 11 zur Vernetzung von elektronischen Einheiten dargestellt. Es weist einen FlexRay-Bus 12 auf, der die Leitungen Bus Plus 13 und Bus Minus 14 enthält. Neben dem FlexRay-Bus 12 sind Verkettungsleitungen 16 angebracht und zwar eine erste Verkettungsleitung 17 und eine zweite Verkettungsleitung 18. Über die Verkettungsleitungen 16 werden Steuergeräte konfiguriert. Beispielhaft ist in der Figur 1 nur ein Steuergerät 19 dargestellt. Das Steuergerät 19 ist an einer Außenfläche 21 mit einem vierpoligen ortsfesten Steckverbinder 22 bestückt. An diesem ist ein beweglicher Gegensteckverbinder 23 angeschlossen, in dem Abzweigungen von Bus Plus 13, Bus Minus 14, der ersten Verkettungsleitung 17 und der zweiten Verkettungsleitung 18 kontaktiert sind.

Die über den Steckverbinder 22 in das Steuergerät 19 eingebrachten Abzweigungen von Bus Plus 13, Bus Minus 14, der ersten Verkettungsleitung 17 und der zweiten Verkettungsleitung 18 werden innerhalb des Steuergeräts 19 zu einer Leiterplatte 24 geführt. An einer Weiche 26 auf der Leiterplatte 24 mündet, jeweils als Abzweigung, die erste Verkettungsleitung 17 in Bus Plus 13 und die zweite Verkettungsleitung 18 in Bus Minus 14. Von der Weiche 26 auf der Leiterplatte 24 führtnach diesen Zusammenführungen, jeweils als Abzweigung, Bus Plus 13 und Bus Minus 14 zu einer Hardware-Schnittstelle 27, die standardmäßig nur zwei Anschlussstellen aufweist und ebenfalls auf der Leiterplatte 24 angebracht ist.

Das Buskommunikationssystem (11) nach Figur 2 in der erfindungsgemäßen Ausgestaltung weist ebenfalls in gleicher Anordnung den FlexRay-Bus 12, die Leitungen Bus Plus 13, Bus Minus 14 und die Verkettungsleitungen 16 mit der ersten und der zweiten Verkettungsleitung 17, 18 auf. Ebenso das Steuergerät 19 mit der Hardware-Schnittstelle 27 sowie dem beweglichen Gegensteckverbinder 23, in dem die Abzweigungen von Bus Plus, Bus Minus 14, der ersten und der zweiten Verkettungsleitung 18 kontaktiert sind.

In Abwandlung zu der Anordnung nach Figur 1 ist in dem an der Außenfläche 21 des Steuergeräts 19 angebrachten Steckverbinder 22 bereits hier die Weiche 26 enthalten, in der, jeweils als Abzweigung, die erste Verkettungsleitung 17 in Bus Plus 13 und die zweite Verkettungsleitung 18 in Bus Minus 14 mündet.

Von der Weiche 26 in dem Steckverbinder 22 führt, jeweils als Abzweigung, Bus Plus 13 und Bus Minus 14 nun direkt zu den beiden Anschlüssen der Hardware-Schnittstelle 27, die auf einer handelsüblichen Standardleiterplatte 28 angebracht ist.

Bei der erfindungsgemäßen Ausgestaltung des Buskommunikationssystem 11 können nun handelsübliche Standardleiterplatten 28 Verwendung finden, die durch ihren einheitlichen Aufbau in großer Stückzahl kostengünstig gefertigt werden können und durch das Fehlen von Zusatzleitungen die Einstrahlmöglichkeit von Störstrahlung reduzieren.

Somit zeichnet sich das Buskommunikationssystem 11 in der erfindungsgemäßen Ausgestaltung insbesondere durch seine kostengünstige Herstellung und eine hohe EMV-Festigkeit aus.

## Patentansprüche

1. Buskommunikationssystem zur Vernetzung von elektronischen Einheiten, mit einem FlexRay-Bus (12), der mit Verkettungsleitungen (16) (Daisy Chain) erweitert ist, um Steuergeräte (19) zu konfigurieren, wobei ein Steuergerät (19) wenigstens eine Weiche (26) zur Eispeisung des FlexRay-Busses (12) mit den Verkettungsleitungen (16) in eine Hardware-Schnittstelle (27) aufweist, **dadurch gekennzeichnet, dass** die Weiche (26) in einem Steckverbinder (22) des Steuergeräts (19) enthalten ist.

2. Buskommunikationssystem nach Anspruch 1, **dadurch gekennzeichnet, dass** der FlexRay-Bus (12) eine Kommunikationsleitung Bus Plus(13) und eine Kommunikationsleitung Bus Minus (14) aufweist und in der Weiche (26) Abzweigungen von Bus Plus (13) mit einer ersten Verkettungsleitung (17) und Bus Minus (14) mit einer zweiten Verkettungsleitung (18) verbunden ist.

3. Buskommunikationssystem nach Anspruch 2, **dadurch gekennzeichnet, dass** das Steuergerät (19) wenigstens eine Standardleiterplatte (28) enthält, auf der die Hardware-Schnittstelle (27) angeordnet ist und die durch die Weiche (26) des Buskommunikationssystems (11) baulich keine Veränderungen aufweist.
